# EUROPEAN PATENT APPLICATION

(11) **EP 2 682 375 A1**
(43) Date of publication of application: **08.01.2014**
(21) Application number: 11859964.6
(22) Date of filing: 29.04.2011
(51) Int. Cl.: C03C 17/36

(54) **LOW EMISSIVITY THIN FILM, LOW EMISSIVITY COATED GLASS AND PRODUCING METHOD THEREOF**

(30) Priority: 01.03.2011 CN 201110049715
(71) Applicant: Soochow University, Jiangsu 215123 (CN)
(72) Inventor: DI, Guoqing, Jiangsu 215123 (CN)
(74) Representative: Melin Granberg, Linda
(86) International application number: PCT/CN2011/073520
(87) International publication number: WO 2012/116518

(57) **Abstract**

A low emissivity thin film comprises a substrate; the first dielectric layer located on the substrate, which is Ta₂O₅; a functional layer located on the first dielectric layer, which is Ag; and the second dielectric layer located on the functional layer, which is Ta₂O₅. Ta₂O₅ can be made into a dense thin film, and when it is used as the dielectric layer, the oxygen, water vapor, etc. in the air can be prevented from penetrating into the functional layer, thereby decreasing the corrosion and oxidation of oxygen and water vapor to the metal silver, increasing the stability of the thin film and reducing the tendency to losing the low emissivity for the thin film. The low emissivity thin film has good optical properties and stability, and can be stored in the air for several years. A low emissivity glass and a producing method thereof are provided, and also have above advantages.

## Description

This application claims the priority to Chinese Patent Application No. 201110049715.2, entitled "LOW EMISSIVITY FILM, LOW EMISSIVITY COATED GLASS AND PREPARING METHOD THEREOF", filed with the Chinese Patent Office on March 1, 2011, which is hereby incorporated by reference in its entirety.

### FIELD OF THE INVENTION

The present disclosure relates to the technical field of low emissivity film, and particularly to a low emissivity film, a low emissivity coated glass and a preparing method thereof.

### BACKGROUND OF THE INVENTION

A low emissivity coated glass, which is also known as Low-E glass, is a glass product, which transmits most visible light, has high reflectivity for infrared thermal rays, and reflects most mid and far infrared thermal radiation. The low emissivity coated glass also has advantages of high light transmission, good heat insulation and energy-saving. The low emissivity coated glass has good heat insulation effect, and can save the energy consumption nearly by 60% to 70% as compared with a common glass.

A method for preparing the low emissivity coated glass includes on-line coating and off-line coating. Specifically, the on-line coating is a method in which tin oxide or fluorine-doped tin oxide is coated by a chemical method, such as thermal spraying or chemical vapor deposition, in the production line of a float glass. The low emissivity coated glass obtained by the on-line coating has lower production cost but poor performance. The off-line coating is a method in which a low emissivity film is coated on a surface of a glass by a method such as magnetron sputtering, after the glass rolls off the line. Although the production cost of the off-line coating is high, the performance of the obtained low emissivity coated glass is good. Therefore, the off-line coating is one of the current research focuses for a low emissivity coated glass.

In the off-line coating process, the low emissivity film coated on the surface of the glass is generally formed by providing a function layer between two transparent dielectric layers. The function layer is generally formed of metallic silver, and the dielectric layer functions to protect the metallic silver film. In addition, an inner dielectric layer can improve an adhesion of silver to the surface of the glass, and also has a function of adjusting the optical performance and the color of a film system. An outer dielectric film can improve solar transmittance in the range of the visible light wavelength. A variety of low emissivity films or low emissivity coated glasses are disclosed in the prior art, which have a structure of a first dielectric layer/a metallic silver function layer/a second dielectric layer. For example, a low emissivity coated glass is provided with a structure of glass/Si₃N₄/Ni (or Ni alloy)/Ag/Ni(or Ni alloy)/Si₃N₄ in the US patent document No. US5344718. A low emissivity coated glass is provided with a structure of glass/Si₃N₄/Ni(or Ni-Cr alloy)/Ag/Ni(or Ni-Cr alloy)/Si₃N₄ in the US patent document No. US5514476. A low emissivity coated glass is provided with a structure of glass/Si₃N₄/NiCr/Ag/NiCr/Si₃N₄ in the US patent document No. US6475626. A low emissivity coated glass is provided with a structure of glass/ZrSiOₓN_{y}/ZnOₓ/Ag/ Ni-CrOₓ/ZrSiOₓN_{y}/Si₃N₄ in the US patent document No. US2007036986. A low emissivity coated glass is provided with a structure of glass/SnO₂/ZnO/Ag/TiO₂/SnO₂ in the US patent document No. US2009104436. A low emissivity coated glass is provided with a structure of glass/TiOₓ/ZnOₓ/NiCr/Ag/NiCrOₓ/ZnOₓ/SiNₓ in the Chinese patent document CN101654333. A low emissivity coated glass is provided with a structure of glass/SiOₓN_{y}/NbOₓ/NiCrOₓ/ZnSnOₓ/Ag/NiCrOₓ/NbOₓ/SiOₓN_{y}/PVB in the Chinese patent document CN101372396. A low emissivity coated glass is provided with a structure of glass/SiOₓ/ZnSnSbOₓ/NiCr/Ag/NiCr/ZnSnSbOₓ/SiOₓ in the Chinese patent document CN101805132.

The low emissivity coated glasses disclosed above have good thermal insulation effect. However, the obtained product with any one of the above structures generally must be processed into a hollow glass within 20 hours, because the dielectric layer is formed of porous Si-based material with the poor stability. Otherwise, oxygen, vapor and the like in the air may permeate the function layer formed of metallic silver via the micropore of the dielectric layer. The metallic silver will be corroded and oxidized to destroy the low emissivity performance of the glass. Although the addition of a layer of metal such as Ni can improve the stability of the low emissivity glass, the structure and the production process of the low emissivity glass will become complex due to the increase in the number of layers.

### SUMMARY OF THE INVENTION

In view of those, an object of the present disclosure is to provide a low emissivity film, a low emissivity coated glass and a preparing method thereof. The low emissivity film and the low emissivity coated glass provided in the prevent disclosure have a simple structure, good stability, and low emissivity performance which will not be easy to be destroyed. In addition, the preparing method provided in the present disclosure has a simple process.

A low emissivity film is provided according to the present disclosure, which includes:
a substrate;
a first dielectric layer provided on the substrate and formed of Ta₂O₅;
a function layer provided on the first dielectric layer and formed ofAg; and
a second dielectric layer provided on the function layer and formed of Ta₂O₅.

A low emissivity coated glass is provided in the present disclosure, which includes:
a glass substrate;
a first dielectric layer provided on the glass substrate and formed of Ta₂O₅;
a function layer provided on the first dielectric layer and formed ofAg; and
a second dielectric layer provided on the function layer and formed of Ta₂O₅.

Preferably, the first dielectric layer may have a thickness of 5nm to 30nm.

Preferably, the function layer may have a thickness of 6nm to 15nm.

Preferably, the second dielectric layer may have a thickness of 30nm to 80nm.

Preferably, the low emissivity coated glass may further include a sealing layer provided on the second dielectric layer and formed of plastic or glass.

Preferably, the low emissivity coated glass may further include a first adjusting layer provided between the glass substrate and the first dielectric layer and formed of Si-based compound.

Preferably, the low emissivity coated glass may further include a second adjusting layer provided on the second dielectric layer and formed of Si-based compound or MgF₂.

A preparing method for a low emissivity coated glass is further provided according to the present disclosure, which includes:
providing a glass substrate;
forming a first dielectric layer on a surface of the glass substrate, the first dielectric layer being formed of Ta₂O₅;
forming a function layer on the first dielectric layer, the function layer being formed of Ag; and
forming a second dielectric layer on the function layer, the second dielectric layer being formed of Ta₂O₅.

Preferably, the first dielectric layer may be formed on the surface of the glass by radio frequency magnetron sputtering method using Ta₂O₅ as a target material; and the second dielectric layer may be formed on the function layer by radio frequency magnetron sputtering method using Ta₂O₅ as a target material.

Comparing with the prior art, a low emissivity film with a structure of substrate/Ta₂O₅/Ag/Ta₂O₅ is provided in the present disclosure, which has a simple structure and stable performance. In the present disclosure, Ta₂O₅ is used as the material of the first dielectric layer and the second dielectric layer, which can form a dense film. In the case of the dielectric layer of Ta₂O₅, oxygen, vapor and the like in the air can effectively be prevented from penetrating the function layer, thereby reducing the corrosion and oxidation of oxygen and vapor to the metal silver, and improving the stability of the low emissivity film. In this way, the low emissivity performance of the low emissivity film will not be easy to be destroyed. In addition, the surface of the second dielectric layer of the low emissivity film or the low emissivity coated glass may be compounded with plastic, glass or the like to form a sealed low emissivity coated product. The low emissivity coated product with the seal structure may be used alone or in combination. It is known by experiments that the low emissivity film and the low emissivity coated glass provided according to the present disclosure have a simple structure, good optical performance and good stability, which can be stored in the air for several years. Furthermore, the preparing method provided according to the present disclosure has a simple process, thus implementing a large-scale production easily.

### BRIEF DESCRIPTION OF THE DRAWINGS

Figure 1 is a graph of an optical transmissivity of a low emissivity coated glass for some light nearby the visible light according to a first embodiment of the present disclosure; and
Figure 2 is a graph of an optical reflectivity of a low emissivity coated glass for some ligh nearby the visible light according to the first embodiment of the present disclosure.

### DETAILED DESCRIPTION OF THE INVENTION

A low emissivity film is provided in the present disclosure, which includes:
a substrate;
a first dielectric layer provided on the substrate and formed of Ta₂O₅;
a function layer provided on the first dielectric layer and formed ofAg; and
a second dielectric layer provided on the function layer and formed of Ta₂O₅.

The low emissivity film according to the present disclosure includes the substrate, the first dielectric layer, the function layer and the second dielectric layer, which has a simple structure and good stability.

In the low emissivity film, the substrate functions as the support. In the present disclosure, the substrate is not particularly defined, which may be a plastic film such as polyester film and polycarbonate film. The substrates with different thicknesses, different materials and different colors can be selected in view of the functions of the low emissivity film.

In the low emissivity film, the emissivity of the whole film system is determined by the function layer. The first dielectric layer and the second dielectric layer respectively located on both sides of the function layer are adapted to protect the function layer. Therefore, the first dielectric layer and the second dielectric layer are adapted to determine the stability of the performance of the whole film system, which will impact directly on the production process and the service life of the low emissivity coated product.

In the present disclosure, the function layer is formed of metallic Ag. Preferably, the function layer has a thickness of 8nm to 15nm, and more preferably 10nm to 13nm.

In the present disclosure, the first dielectric layer and the second dielectric layer are formed of Ta₂O₅. Ta₂O₅ has excellent physical performance, such as high dielectric constant, high melting point, high transparency and high refractive index. Furthermore, a dense film may be formed by Ta₂O₅, which can prevent effectively oxygen, vapor and the like in the air from penetrating the function layer. Thus, the corrosion and oxidation of oxygen and vapor to the metal silver will be reduced, and the stability of the low emissivity film will be improved, so that the low emissivity performance of the low emissivity film will not be easy to be destroyed.

In the low emissivity film provided in the present disclosure, the first dielectric layer is formed on the substrate as an inner dielectric layer, which can prevent oxygen and vapor which come from the substrate from being diffused into the function layer, and adjust the optical performance, the color and the like of the low emissivity film. Preferably, the first dielectric layer has a thickness of 5nm to 30nm, more preferably 10nm to 25nm, and most preferably 15nm to 20nm.

The second dielectric layer serves as an outer dielectric layer, which can separate oxygen and vapor which come from the outer side of the surface of the low emissivity film, so as to protect metallic silver film, and adjust the optical reflectivity or the color of the film. Preferably, the second dielectric layer has a thickness of 30nm to 80nm, more preferably 40nm to 70nm, and most preferably 50nm to 60nm.

A low emissivity coated glass is also provided in the present disclosure, which includes:
a glass substrate;
a first dielectric layer provided on the glass substrate and formed of Ta₂O₅;
a function layer provided on the first dielectric layer and formed ofAg; and
a second dielectric layer provided on the function layer and formed of Ta₂O₅.

The low emissivity coated glass provided in the present disclosure has a structure of glass substrate/Ta₂O₅/Ag/Ta₂O₅.

In the present disclosure, the glass substrate is not particularly defined, which may be silicate glass, borate glass, phosphate glass or the like.

The first dielectric layer of Ta₂O₅ is provided on the glass substrate. Preferably, the first dielectric layer has a thickness of 5nm to 30nm, more preferably 10nm to 25nm, and most preferably 15nm to 20nm.

The function layer of metallic Ag is provided on the first dielectric layer. Preferably, the function layer has a thickness of 8nm to 15nm, and more preferably 10nm to 13nm.

The second dielectric layer of Ta₂O₅ is provided on the function layer. Preferably, the second dielectric layer ha a thickness of 30nm to 80nm, more preferably 40nm to 70nm, and most preferably 50nm to 60nm.

A first adjusting layer is preferably provided between the glass and the first dielectric layer to implement the improved performance of the obtained low emissivity coated glass. The first adjusting layer may be formed of a Si-based compound, and the color of the low emissivity glass may be adjusted by adjusting the thickness of Si-based compound. The thickness of the first adjusting layer is not particularly defined in the present disclosure, which can be adjusted by those skilled in the art in view of the requirements of the product.

A second adjusting layer is preferably provided on the second dielectric layer. The second adjusting layer may be formed of a Si-based compound or MgF₂, which can adjust the optical reflectivity of the low emissivity coated glass for some light nearby the visible light. The thickness of the second adjusting layer is not particularly defined in the present disclosure, which can be adjusted by those skilled in the art in view of the requirements of the product.

In the low emissivity coated glass, a shielding layer may be provided between the first dielectric layer and the function layer, and between the second dielectric layer and the function layer, which is formed of Ni, Ni-Cr alloy or the like, so as to improve the performance of the low emissivity coated glass.

The low emissivity coated glass provided in the present disclosure may be prepared by the following steps:
providing a glass substrate;
forming a first dielectric layer formed of Ta₂O₅ on a surface of the glass substrate;
forming a function layer of Ag on the first dielectric layer; and
forming a second dielectric layer of Ta₂O₅ on the function layer.

In the present disclosure, the first dielectric layer, the function layer and the second dielectric layer are formed sequentially on the glass substrate in magnetron sputtering method by directly using Ta₂O₅ and Ag as the raw material.

Firstly, the first dielectric layer is formed on the glass substrate by sputtering. The power for the radio frequency magnetron sputtering arranges preferably from 50W to 150W, more preferably from 60W to 110W, and most preferably from 70W to 100W. A mixed gas of argon and oxygen is preferably used as a working gas in the process of the radio frequency magnetron sputtering. Specifically, the volume ratio of argon to oxygen is preferably 80 to 95: 5 to 20, and more preferably 85 to 90: 10 to 15.

The function layer is formed on the formed first dielectric layer by the radio frequency magnetron sputtering. The power for the radio frequency magnetron sputtering arranges preferably from 50W to 150W, more preferably from 60W to 110W, and most preferably from 70W to 100W. Argon is preferably used as the working gas in the process of the radio frequency magnetron sputtering.

The second dielectric layer is further formed on the formed function layer by the radio frequency magnetron sputtering. The power for the radio frequency magnetron sputtering arranges preferably from 50W to 150W, more preferably from 60W to 110W, and most preferably from 70W to 100W. A mixed gas of argon and oxygen is preferably used as the working gas in the process of the radio frequency magnetron sputtering. Specifically, the volume ratio of argon to oxygen is preferably 80 to 95: 5 to 20, and more preferably 85 to 90: 10 to 15.

In the case where the low emissivity coated glass further includes a first adjusting layer, a second adjusting layer, a shielding layer or the like, these layers may also be formed by the radio frequency magnetron sputtering. The parameter of the radio frequency magnetron sputtering can be adjusted by those skilled in the art in view of the requirement.

The low emissivity coated glass in the present disclosure preferably further includes a sealing layer located on the second dielectric layer and formed of plastic or glass to implement an improved utilization function of the resulting low emissivity coated glass. The plastic may be flexible plastic or rigid plastic, such as polyester plastic or polycarbonate rigid plastic. The sealing layer may be glued by a gluing material such as ultraviolet UV curable adhesive, or may be compounded to the second dielectric layer by a method such as hot pressing, so as to form a sealed low emissivity coated product. The sealed low emissivity coated product may be used alone or in combination.

The tests for transmissivity, reflectivity and stability are performed on the obtained low emissivity coated glass. The result indicates that the low emissivity coated glass provided in the present disclosure has good optical performance and good stability.

In the case where the glass substrate is replaced by other substrates, for example, a plastic film such as a polyester film or polycarbonate film, the low emissivity film may be obtained by the preparing method described above. In the case where the glass substrate is replaced by resin, other types of low emissivity products may be obtained by the preparing method described above, and the obtained the products can be applied to other fields.

As compared with the prior art, a low emissivity film with a structure of Ta₂P₅/Ag/ Ta₂O₅ is provided in the present disclosure, which has a simple structure and stable performance. In this present disclosure, Ta₂O₅ is used as the first dielectric layer and the second dielectric layer, which can form a dense thin film. In the case of the dielectric layer of Ta₂O₅, oxygen, vapor and the like in the air can effectively be prevented from penetrating the function layer, thereby reducing the corrosion and oxidation of oxygen and vapor to the metal silver, and improving the stability of the low emissivity film. In this way, the low emissivity performance of the low emissivity film will not be easy to be destroyed.

To further explain the present disclosure, the low emissivity film, the low emissivity coated glass and the preparing method thereof provided in the present disclosure will be described in detail in conjunction with embodiments below.

In the following embodiments, Ta₂O₅ is Ta₂O₅ target material purchased from Beijing General Research Institute of Nonferrous Metals. A radio frequency magnetron sputtering equipment is ultra-high vacuum multifunction magnetron sputtering equipment. The thickness of the film is measured by a film thickness tester made by Japan Kosaka. And the transmissivity and the reflectivity of the low emissivity coated glass are measured by 570 UV-VIS-NIR spectrophotometer and FT/IR-670plus Fourier transform infrared spectrometer which are made by JASCO.

### First embodiment

Ta₂O₅ is sputtered on the glass with a thickness of 1mm to obtain a Ta₂O₅ film. Specifically, the power for sputtering is 50W, a mixed gas including 90% argon and 10% oxygen is used as the working gas, the working pressure is 0.5Pa, and the time for sputtering is 100s. Then, Ag is sputtered on the obtained Ta₂O₅ film to obtain an Ag film. Specifically, the power for sputtering is 60W, argon is used as the working gas, the working pressure is 0.5Pa, and the time for sputtering is 100s. Then, Ta₂O₅ is sputtered on the obtained Ag film. Specifically, the power for sputtering is 50W, a mixed gas including 90% argon and 10% oxygen is used as the working gas, the working pressure is 0.5Pa, and the time for sputtering is 600s. Thus, the low emissivity coated glass with a structure of glass/Ta₂O₅(5nm)/Ag(9nm) /Ta₂O₅(30nm) is obtained.

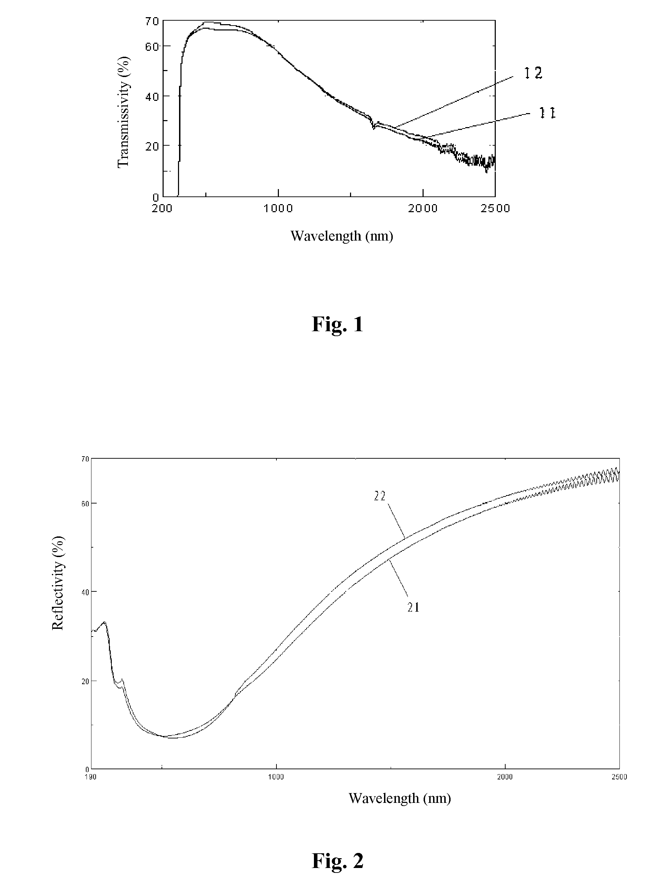

The test for the transmissivity and the reflectivity is performed on the low emissivity coated glass, and the results are shown in Figure 1 and Figure 2. Figure 1 is a graph of an optical transmissivity of a low emissivity coated glass for light nearby the visible light according to a first embodiment of the present disclosure, in which the line 11 is a line of a transmissivity of the low emissivity coated glass obtained according to the first embodiment. Figure 2 is a graph of an optical reflectivity of a low emissivity coated glass for light nearby the visible light according to the first embodiment of the present disclosure, in which the line 21 is a line of a reflectivity of the low emissivity coated glass obtained according to the first embodiment. As illustrated from Figure 1 and Figure 2, the low emissivity coated glass according to the first embodiment has the same optical characteristic as that of a typical low emissivity coated glass.

No obvious variation is observed on the surface of the low emissivity coated glass after the low emissivity coated glass has been kept in the air for 10 days.

The test for the transmissivity and the reflectivity is further performed on the low emissivity coated glass which has been kept under the conditions of normal temperature and dark for 6 years. The results are shown in Figure 1 and Figure 2. Figure 1 is a graph of an optical transmissivity of a low emissivity coated glass for light nearby the visible light according to a first embodiment of the present disclosure, in which the line 12 is a line of a transmissivity of the low emissivity coated glass which has been kept for 6 years according to the first embodiment. Figure 2 is a graph of an optical reflectivity of a low emissivity coated glass for light nearby the visible light according to the first embodiment of the present disclosure, in which the line 22 is a line of a reflectivity of the low emissivity coated glass which has been kept for 6 years according to the first embodiment. As illustrated from Figure 1 and Figure 2, after being kept for 6 years, the transmissivity property and the reflectivity property of the low emissivity coated glass are substantially unchanged. As a result, the low emissivity coated glass provided in the present disclosure has a simple structure and good stability.

### Second embodiment

Ta₂O₅ is sputtered on the glass with a thickness of 1mm to obtain a Ta₂O₅ film. Specifically, the power for sputtering is 150W, a mixed gas including 90% argon and 10% oxygen is used as the working gas, the working pressure is 0.5Pa, and the time for sputtering is 120s. Then, Ag is sputtered on the obtained Ta₂O₅ film to obtain an Ag film. Specifically, the power for sputtering is 80W, argon is used as the working gas, the working pressure is 0.5Pa, and the time for sputtering is 40s. Then, Ta₂O₅ is sputtered on the obtained Ag film. Specifically, the power for sputtering is 150W, a mixed gas including 90% argon and 10% oxygen is used as the working gas, the working pressure is 0.5Pa, and the time for sputtering is 350s. Thus, the low emissivity coated glass with a structure of glass/Ta₂O₅ (28nm)/Ag (10nm)/Ta₂O₅ (80nm) is obtained.

The test for the transmissivity and the reflectivity is performed on the low emissivity coated glass, and the result indicates that the low emissivity coated glass has the same optical characteristic as a typical low emissivity coated glass.

No obvious variation is observed on the surface of the low emissivity coated glass, after the low emissivity coated glass has been kept in the air for 10 days.

### Third embodiment

Ta₂O₅ is sputtered on the glass with a thickness of 1mm to obtain a Ta₂O₅ film. Specifically, the power for sputtering is 80W, a mixed gas including 90% argon and 10% oxygen is used as the working gas, the working pressure is 0.5Pa, and the time for sputtering is 120s. Then, Ag is sputtered on the obtained Ta₂O₅ film to obtain an Ag film. Specifically, the power for sputtering is 50W, argon is used as the working gas, the working pressure is 0.5Pa, and the time for sputtering is 150s. Then, Ta₂O₅ is sputtered on the obtained Ag film. Specifically, the power for sputtering is 80W, a mixed gas including 90% argon and 10% oxygen is used as the working gas, the working pressure is 0.5Pa, and the time for sputtering is 400s. Thus, the low emissivity coated glass with a structure of glass/Ta₂O₅(15nm)/Ag(15nm) /Ta₂O₅(50nm) is obtained.

The test for the transmissivity and the reflectivity is performed on the low emissivity coated glass, and the result indicates that the low emissivity coated glass has the same optical characteristic as a typical low emissivity coated glass.

No obvious variation is observed on the surface of the low emissivity coated glass, after the low emissivity coated glass has been kept in the air for 10 days.

### Fourth embodiment

Ta₂O₅ is sputtered on the flexible polyester film with a thickness of 0.2mm to obtain a Ta₂O₅ film. Specifically, the power for sputtering is 80W, a mixed gas including 90% argon and 10% oxygen is used as the working gas, the working pressure is 0.5Pa, and the time for sputtering is 120s. Then, Ag is sputtered on the obtained Ta₂O₅ film to obtain an Ag film. Specifically, the power for sputtering is 65W, argon is used as the working gas, the working pressure is 0.5Pa, and the time for sputtering is 90s. Then, Ta₂O₅ is sputtered on the obtained Ag film. Specifically, the power for sputtering is 80W, a mixed gas including 90% argon and 10% oxygen is used as the working gas, the working pressure is 0.5Pa, and the time for sputtering is 400s. Thus, the low emissivity film with a structure of polyester film/ Ta₂O₅(15nm)/Ag(10nm)/Ta₂O₅(50nm) is obtained.

The test for the transmissivity and the reflectivity is performed on the low emissivity film, and the result indicates that the low emissivity film has the same optical characteristic as a typical low emissivity film.

No obvious variation is observed on the surface of the low emissivity film, after the low emissivity film has been kept in the air for 10 days.

As known from the embodiments described above, the low emissivity film provided in the present disclosure has a simple structure, and the low emissivity coated product can be obtained by forming the low emissivity film on the flexible plastic film or rigid glass, thus implementing good performance and good stability.

These described above are only the preferable embodiments of the invention, and it should be noted that many modifications and variations can be made by those ordinary skilled in the art without deviating from the principle of the invention, which should also be considered as within the scope of protection of the invention.

## Claims

1. A low emissivity film, comprising:
a substrate;
a first dielectric layer provided on the substrate and formed of Ta₂O₅;
a function layer provided on the first dielectric layer and formed ofAg; and
a second dielectric layer provided on the function layer and formed of Ta₂O₅.

2. A low emissivity coated glass, comprising:
a glass substrate;
a first dielectric layer provided on the glass substrate and formed of Ta₂O₅;
a function layer provided on the first dielectric layer and formed ofAg; and
a second dielectric layer provided on the function layer and formed of Ta₂O₅.

3. The low emissivity coated glass according to claim 2, wherein the first dielectric layer has a thickness of 5nm to 30nm.

4. The low emissivity coated glass according to claim 2, wherein the function layer has a thickness of 6nm to 15nm.

5. The low emissivity coated glass according to claim 2, wherein the second dielectric layer has a thickness of 30nm to 80nm.

6. The low emissivity coated glass according to claim 2, further comprising: a sealing layer provided on the second dielectric layer and formed of plastic or glass.

7. The low emissivity coated glass according to any one of claims 2 to 6, further comprising:
a first adjusting layer provided between the glass substrate and the first dielectric layer and formed of Si-based compound.

8. The low emissivity glass according to any one of claims 2 to 6, further comprising:
a second adjusting layer provided on the second dielectric layer and formed of Si-based compound or MgF₂.

9. A preparing method for a low emissivity glass, comprising:
providing a glass substrate;
forming a first dielectric layer on a surface of the glass substrate, the first dielectric layer being formed of Ta₂O₅;
forming a function layer on the first dielectric layer, the function layer being formed of Ag; and
forming a second dielectric layer on the function layer, the second dielectric being formed of Ta₂O₅.

10. The preparing method according to claim 9, wherein the first dielectric layer is formed on the surface of the glass by radio frequency magnetron sputtering method using Ta₂O₅ as a target material; and the second dielectric layer is formed on the function layer by radio frequency magnetron sputtering method using Ta₂O₅ as a target material.
